# EUROPEAN PATENT SPECIFICATION

(11) **EP 3 364 108 B1**
(45) Date of publication and mention of the grant of the patent: **01.04.2020**
(21) Application number: 18157312.2
(22) Date of filing: 19.02.2018
(51) Int. Cl.: F24C 3/12, F24C 7/08, A47J 37/00, G05G 1/10, H05B 6/64, F16D 3/18, H01H 3/08, H01H 3/10, A47J 31/44, G05G 1/08, G05G 5/05

(54) **KNOB ASSEMBLY AND COOKING APPLIANCE INCLUDING A KNOB ASSEMBLY**
KNOPFANORDNUNG UND KOCHGERÄT MIT EINER KNOPFANORDNUNG
ENSEMBLE DE BOUTON ET APPAREIL DE CUISSON COMPRENANT UN ENSEMBLE DE BOUTON

(30) Priority: 17.02.2017 KR 20170021879; 17.02.2017 KR 20170021878; 22.02.2017 KR 20170023774; 24.07.2017 KR 20170093734; 26.07.2017 KR 20170094806; 06.12.2017 KR 20170167073
(43) Date of publication of application: 22.08.2018
(73) Proprietor: LG Electronics Inc., Yeongdeungpo-gu Seoul 07336 (KR)
(72) Inventor: Ha, Yeonsik, 08592 Seoul (KR)
(74) Representative: Ter Meer Steinmeister & Partner

(56) References cited:
- WO-A1-2013/175438
- GB-A- 2 081 874

## Description

### 1. Technical field

A knob assembly and a cooking apparatus including a knob assembly are disclosed herein.

### 2. Background

A cooking apparatus is a home appliance that cooks food or other items (hereinafter "food") and may be provided or installed in a kitchen. Such cooking apparatuses may be classified by heating source, shape, and/or type of fuel used. Cooking apparatuses may also be classified according to a form of cooking food, for example, there may be open-type and closed-type cooking apparatuses according to how food is loaded or cooked into or on the cooking apparatus. Closed-type cooking apparatuses may include an oven, or a microwave oven, for example. Open-type cooking apparatuses may include a cooktop, or a hob, for example.

Closed-type cooking apparatuses may be cooking apparatuses that shield a space in which food is positioned and heat the space to cook the food. Open-type cooking apparatuses may be cooking apparatuses in which food or a container in which food is contained is positioned in or provided on an open space, and the food or the container for food is heated to cook the food.

In the closed-type cooking apparatus, a cooking compartment may be provided which may be a space in which food may be loaded and which may be shielded to cook the food. The cooking compartment may be a space in which food is cooked. A heating source may be provided in the cooking compartment or in an external space thereof to heat the cooking compartment.

A combined cooking apparatus may be provided in which a closed-type cooking apparatus and an open-type cooking apparatus are both provided or installed, and a plurality of heating sources may be used to cook various foods at the same time. In the combined cooking apparatus, the open-type cooking apparatus may be positioned above the closed-type cooking apparatus. A plurality of heaters or burners may be installed on the open type cooking apparatus to cook a plurality of food at the same time. For example, if a user barbecues meat or fish or makes bread, the closed-type cooking apparatus may be used to cook such food. If a user cooks food in a container, the open-type cooking apparatus with an exposed top may be used to cook the food.

The open-type cooking apparatus may include a gas range, which may cook food using flames generated when gases are burnt. There are several methods of adjusting a flame strength of a cooking apparatus. A method of adjusting heating power may include adjusting a rotational amount of a knob that rotates around a predetermined rotational shaft. The knob may be connected to a valve that controls a flow rate of gases to mechanically control an opening degree of the valve. Such methods may also include electronically measuring a rotational amount of a knob and electronically controlling an opening degree of a valve based on a measured result.

The knob may be rotatably installed on a rotational shaft. As the knob may not be externally aligned due to a size error in a manufacturing process or an assembly deviation in an assembling process, an external shape of the knob may be spoiled and a malfunction of the knob may occur.
GB 2 081 874 relates to control systems for gas appliances.
WO 2013/175438 relates to a control device for gas taps.

### SUMMARY

The objects are solved by the features of the independent claims. Preferred embodiments are outlined in the dependent claims.

According to one aspect, a knob assembly is provided, comprising: a valve including a movable valve shaft; a knob connected to a knob shaft coupled with the valve shaft; a knob ring that surrounds a periphery of the knob and supports the knob shaft; a actuating member coupled with the knob ring; a support frame that supports an outer circumferential surface of the actuating member; and a fixing frame coupled with the support frame to prevent the actuating member from separating from the support frame. That is, the valve may include a valve shaft movable with respect to the valve.

The valve may be fixed to a frame. The support frame may be fixed to a guide bar. The valve may include a valve body; an opening/closing portion inserted into the valve body to adjust a flow rate of a fluid, such as a gas, passing through the valve, the valve shaft being movably inserted into the opening/closing portion; an elastic spring inserted between the opening/closing portion and the valve shaft; and a valve cap that prevents the valve shaft from separating from the opening/closing portion. The valve shaft may include a key. The key may be configured to be inserted in the opening/closing portion. The opening/closing portion may include an insertion hole into which the valve shaft is insertable and a key groove into which the key is insertable. The knob ring may support the knob shaft at two or more points. The knob ring includes a knob ring body; a rear plate including a support hole that supports the valve shaft coupled with a rear surface of the knob ring body, the valve shaft passing through the support hole; and a support tube coupled with the rear plate to support the valve shaft. The support tube may include a flange coupled with the rear plate; and a tapered tube that extends from the flange and includes a supporter that supports an end of the valve shaft. A disc portion may be configured to be inserted between the knob ring and a panel or front panel. A bearing shell may include a cylinder portion inserted between the actuating member and the support frame. A knob ring encoder may be provided configured to sense rotation of the actuating member. A knob encoder may be provided configured to sense rotation of the valve shaft. The knob ring may further include a display that displays a time of a timer or a heating power. The knob ring may further include a display configured to display a time of a timer and/or a heating power on a same surface of the display. The fixing frame may be configured to restrict rotation of the actuating member within a predetermined angle range. The fixing frame may have a bow-tie shape such that ends of the fixing frame restrict the actuating member. The actuating member may include a actuating member body and at least one wing that extends out in at least one direction from the actuating member body, and wherein a pair of restoring springs are fixed to the at least one wing. The valve cap may be coupled to the valve body by at least one screw.

According to another aspect, a cooking apparatus is provided including a knob assembly according to any one of the herein described embodiments.

According to another aspect, a cooking apparatus is provided, comprising: a panel having a front surface and a rear surface; a rotatable knob that controls operation of a burner, wherein the rotatable knob is connected to a knob shaft; a knob ring that surrounds a periphery of the knob, the knob ring being provided on the front surface of the panel and passing through the panel so as to support the knob shaft; a valve that adjusts a flow rate of gas introduced to the burner, the valve including a movable valve shaft coupled with the knob shaft; a actuating member coupled with the knob ring; a support frame provided on the rear surface of the panel to support an outer circumferential surface of the actuating member; and a fixing frame coupled with the support frame to prevent the actuating member from moving as the knob is rotated.

The valve may include a valve body; an opening/closing portion inserted into the valve body to adjust the flow rate of gas, the valve shaft being movably inserted into the opening/closing portion; an elastic spring inserted between the opening/closing portion and the valve shaft; and a valve cap that prevents the valve shaft from separating from the opening/closing portion. The valve shaft may include a key, wherein the key is configured to be inserted in the opening/closing portion. The opening/closing portion may include an insertion hole into which the valve shaft is inserted and a key groove into which the key is inserted. The actuating member may include a actuating member body and a wing that extends out from the actuating member body. Ends of a pair of restoring springs may be fixed to the wing to restore a position of the knob after the knob is rotatedThe fixing frame may have a bow-tie shape to restrict rotation of the knob and the actuating member within a predetermined angle range.

According to another aspect, a knob assembly is provided, comprising: a knob connected to a knob shaft; a knob ring that surrounds a periphery of the knob and supports the knob shaft; a actuating member coupled with the knob ring; a support frame that supports an outer circumferential surface of the actuating member; a fixing frame coupled with the support frame to prevent the actuating member from separating from the support frame; and a valve that connects to the knob via the knob shaft. The valve may include a valve body; an opening/closing portion inserted into the valve body to adjust a flow rate of fluid passing through the valve; a valve shaft that couples to the knob shaft and is movably inserted into the opening/closing portion; an elastic spring inserted between the opening/closing portion and the valve shaft; and a valve cap that prevents the valve shaft from separating from the opening/closing portion. The valve shaft may include a key. The key may be configured to be inserted in the opening/closing portion. The opening/closing portion may include an insertion hole into which the valve shaft is inserted and a key groove into which the key is inserted.

According to another aspect, a cooking apparatus is provided including said knob assembly.

### BRIEF DESCRIPTION OF THE DRAWINGS

Embodiments will be described in detail with reference to the following drawings in which like reference numerals refer to like elements, and wherein:
FIG. 1 is a view of a knob assembly of a cooking apparatus not according to the invention;

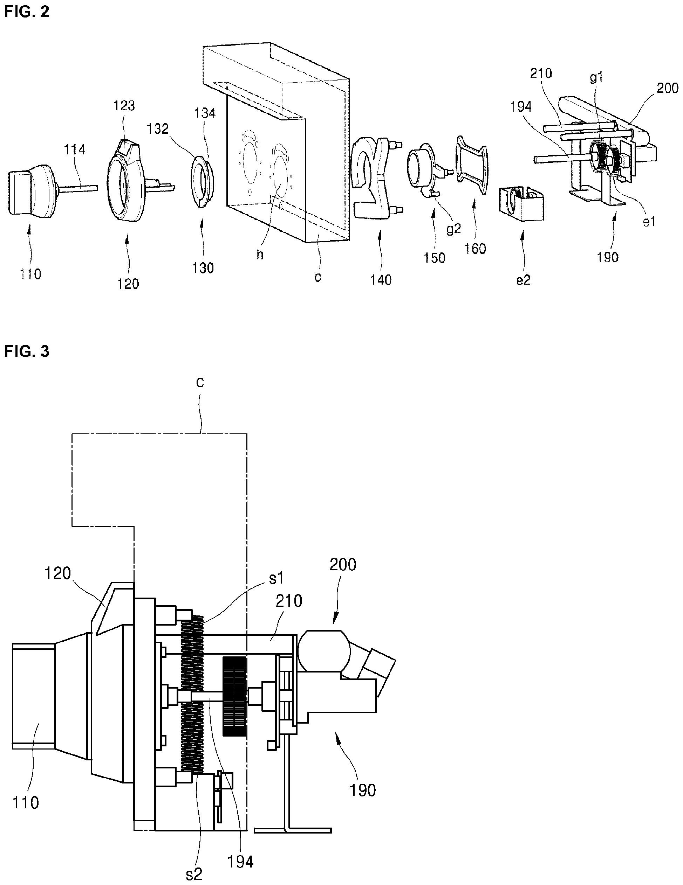

FIG. 2 is an exploded view of the knob of FIG. 1;
FIG. 3 is an assembled view of the knob assembly of FIG. 1;
FIG. 4 is a cross-sectional view of the knob assembly of FIG. 1;
FIG. 5 is a perspective view of a valve according to an embodiment;
FIG. 6 is an exploded perspective view of the valve of FIG. 5;
FIG. 7 is an exploded perspective view of a knob ring according to the invention;
FIG. 8 is an exploded rear perspective view of components of the knob ring of FIG. 7; and
FIG. 9 is a rear view of the knob assembly of FIG. 1.

### DETAILED DESCRIPTION

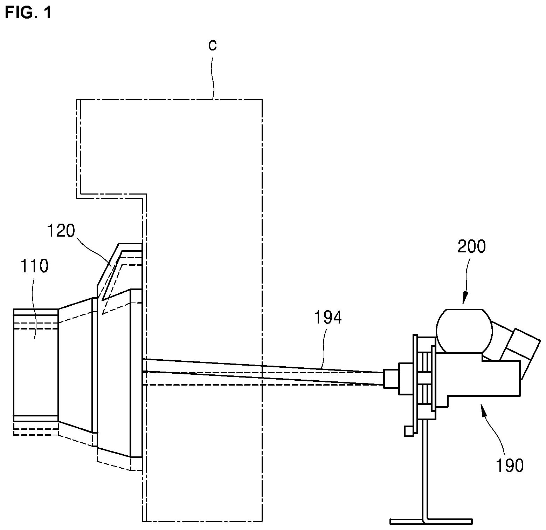

Referring to FIG. 1, a knob assembly for a cooking apparatus may include a valve 190 that adjusts a gas supply amount to a burner of the cooking apparatus. The valve 190 may be adjusted by a knob handle or knob 110 exposed in front of a front panel c. The valve 190 and the knob handle 110 may be connected by a valve shaft 194 connected to the valve 190. The knob handle 110 may be coupled with the valve shaft 194 in such a way that the knob handle 110 is turned and to operate the valve 190. The valve 190 may include the valve shaft 194. An opening degree of the valve 190 may be adjusted by rotation of the valve shaft 194. Changing the opening degree of the valve 190 may adjust heating power of the burner.

The knob handle 110 and a knob ring 120 that annularly surrounds the knob handle 110 may be provided on or at an exterior of the front panel c. The knob handle 110 may be coupled with the valve shaft 194 so that the valve 190 may be adjusted by the knob handle 110. As the valve 190 may be manufactured, for example, using a method of welding a cast, there may be a position tolerance of the valve shaft 194 during manufacturing. Such tolerance of the valve shaft 194 may cause a deviation or change in position of the knob handle 110 when it is assembled with the valve shaft 194. The deviation in position of the knob handle 110 may increase when a length of the valve shaft 194 is increased. The tolerance of the valve shaft 194 may be directly related to assembly tolerance between the knob handle 110 and the knob ring 120 assembled with the valve shaft 194.

Referring to FIG. 1, an original assembling position of the knob handle 110 and the knob ring 120 is represented by a dotted line. When the tolerance of the valve shaft 194 occurs, the assembling position of the knob handle 110 and the knob ring 120 may be changed, as represented by a solid line.

A plurality of burners may be provided in or on a cooking apparatus. In such a cooking apparatus with a plurality of burners, a plurality of knob handles 110 and knob rings 120 may be connected to a plurality of valves 190 thereof. When a tolerance occurs in respective valve shafts 190, alignment between the knob handles 110 and the knob rings 120 may be off and may deteriorate an external appearance of the cooking apparatus.

The tolerance of the valve shaft 194 may cause not only a simple external defect but may also cause a malfunction. This is because rotation of the knob handle 110 may not be smooth during operation due to the twisted valve shaft 194 and a defect when the knob handle 110 is inserted and does not return may occur. To solve the above-described problems, embodiments disclosed herein may improve external quality or appearance and may reduce malfunctions by assembling the knob handle 110 and the knob ring 120 at a precise position.

A knob handle may be connected to a valve shaft of a valve. The valve shaft may have a structure which may be rotatable only at a fixed position with respect to the valve. Accordingly, there may be a problem in which twisting of the valve shaft 194 may be directly transferred to the knob handle.

According to embodiments disclosed herein, a position of the knob handle 110 may not be changed or rotated by the valve shaft 194, rather, the valve shaft 194 may be moved corresponding to a position of the knob handle 110 by applying a valve 190, or so-called valve 190 that allows the valve shaft 194 to be moved upward, downward, and laterally with respect to the valve 190.

In a related art cooking apparatus, a position of a knob handle may be determined only by a valve shaft. However, even though the knob handle 110 according to embodiments may be fixed at a position aligned based on the front panel c, the valve shaft 194 of the valve 190 may be moved by the valve 190 with the valve shaft 194.

The knob handle 110 may have a circular shape including a handle portion that protrudes. The handle portion may have a protruding bar shape but may also be in various shapes and embodiments are not limited thereto. The knob handle 110 may be manufactured, for example, using a synthetic resin injection material but may also be manufactured by processing a metal material. A material and shape of the knob handle 110 may be varied.

A knob ring 120 may be provided on an outer circumferential surface of the knob handle 110 to improve an external shape of the knob handle 110. The knob ring 120 may support the knob handle 110 and finish the external shape around the knob handle 110 to improve quality and appearance.

The knob ring 120 may restrict a position of the knob handle 110. As the knob handle 110 moves upward, downward, and laterally, the knob handle 110 coupled only with the valve shaft 194 may also move accordingly. The knob ring 120 may restrict a position of the knob handle 110 to allow the knob handle 110 to remain at a predetermined position.

The knob ring 120 may be configured to perform as or may include a timer-operating switch and a display 123 that displays time and a level of heating power. The knob ring 120 may be configured to be independently rotatable from the knob handle 110 so that the time may be set by operating the knob ring 120. The knob ring 120 may include the display 123 to display the time and the level of heating power through the display 123.

A knob encoder e1 that senses a rotational amount of the knob handle 110 and a knob ring encoder e2 that senses a rotational amount of the knob ring 120 may be included. The knob encoder e1 may sense a rotational amount of a gear g1 coupled with the valve shaft 194, and the knob ring encoder e2 may sense rotation of a gear g2 included in a actuating member 150.

The knob handle 110 and the knob ring 120 may be exposed outward from the front panel c of the cooking apparatus. The heating power and the time of the timer may be displayed on the display 123. The heating power displayed on the display 123 may be sensed from the rotation amount of the knob handle 110. The time of the timer displayed on the display 123 may be sensed by operation of the knob ring 120.

The display 123 may include a part or area that displays the heating power and a part or area that displays the time of the timer or may be configured to selectively display the heating power and the time of the timer through one display 123 as shown in the drawing. However, embodiments are not limited thereto. For example, when the timer is not set, only heating power may be displayed. When the timer is set, heating power may be displayed for a set or predetermined time and then a time of the timer may be displayed for a set or predetermined time.

A color of a lighting device when the heating power is displayed may be different from a color of a lighting device when the time of the timer is displayed so that a user may easily check or determine whether a displayed number indicates the heating power or the time of the timer. For example, the heating power may be displayed in a red color and the time of the timer may be displayed in a white or blue color. When both the heating power and the time of the timer are displayed, the heating power may be displayed for two seconds and then the time of the timer may be displayed for two seconds.

The heating power and the time of the timer may be adjusted through the knob assembly. When both the heating power and the time of the timer are displayed through the knob assembly, an additional display portion or display on the front panel c may be unnecessary. The above-described knob assembly may be applied to all oven ranges including ovens and cook tops having only burners and may have an advantage of being used as a common component among them.

A actuating member 150 may be coupled with a rear surface of the knob ring 120 and may rotate while being integrated with the knob ring 120. A rotational amount of the actuating member 150 and a rotational amount of the knob ring 120 may be identical. Accordingly, operation of the knob ring 120 may be sensed by sensing the rotational amount of the actuating member 150. For this, the actuating member 150 may include the gear g2.

A support frame 140 may be coupled with the front panel c and may support the knob ring 120. The knob handle 110 and the knob ring 120 may be coupled at a predetermined position on the front panel c, and the front panel c may be formed of a thin metal film material, for example. When a hole h is formed at the front panel c and the knob ring 120 rotates while in contact with the hole h, a problem in which the knob ring 120 may be cut or ground off may occur. Accordingly, the support frame 140 may be coupled with the hole h formed at the front panel c.

The support frame 140 may include a guide groove corresponding to an outer diameter of the actuating member 150 coupled with the knob ring 120. The actuating member 150 may be supported by the support frame 140 at an outer circumferential surface thereof and may be rotated at a predetermined or predetermined position.

As a position of the knob ring 120 may be determined by the support frame 140 and the support frame 140 may be fastened to the front panel c, the position of the knob ring 120 may be fixed based on the front panel c. The support frame 140 may surround the outer circumferential surface of the actuating member 150 and may support the actuating member 150 to rotate around a fixed axis.

The support frame 140 may be fastened to a frame 200, such as a burner frame, to which the valve 190 may be fixed, through a guide bar 210. The guide bar 210 may fix the frame 200 and the support frame 140 so that the support frame 140 may be fixed with respect to the frame 200.

A fixing frame 160 may be fastened and fixed to the support frame 140 by a fastening means, such as, for example, a screw, and may prevent the actuating member 150 from deviating or moving backward from the fixing frame 160 toward an inside of the cooking apparatus or separating from the support frame 140. The fixing frame 160 may restrict a rotational range of the actuating member 150 so that the actuating member 150 and the knob ring 120 may only rotate laterally within a predetermined angle range.

The fixing frame 160 may be formed in a bow-tie shape in which an angle of incidence of a part or portion corresponding to a wing thereof may limit or restrict the actuating member 150 to rotate within the angle range, and a part or portion that connects both wings may prevent the actuating member 150 from deviating backward.

A bearing shell 130 may allow the knob ring 120 to be smoothly operated. The bearing shell 130 may include a cylinder portion 134 having a cylindrical shape and a disc portion 132 which may be bent from the cylinder portion 134 and protrude in a radial direction.

The cylinder portion 134 may be inserted between the outer circumferential surface of the actuating member 150 coupled with the knob ring 120 and an inner circumferential surface of the fixing frame 160 and may reduce friction between the actuating member 150 and the fixing frame 160. The disc portion 132 may be inserted between the front panel c and the knob ring 120 at the hole h in the front panel c and may reduce friction between the knob ring 120 and the front panel c. The disc portion 132 may allow the knob ring 120 to be spaced apart at a predetermined interval from the front panel c to reduce scratches at the front panel c caused by operation of the knob ring 120.

The knob ring 120 may have a return type or restoring operation structure. The knob ring 120 may be rotated clockwise or counterclockwise due to an external force within a predetermined angle range but may return to an original position when the external force is released. Restoring springs s1 and s2 may provide restoration forces that return the knob ring 120 to the original position. The restoring springs s1 and s2 may include a first restoring spring s1 that provides a clockwise restoration force and a second restoring spring s2 that provides a counterclockwise restoration force. When an external force is not applied, elastic forces of the first restoring spring s1 and the second restoring spring s2 balance in such a way that the knob ring 120 may be maintained at an initial position.

Both ends of the restoring springs s1 and s2 maybe fixed to the support frame 140 to which the actuating member 150 and the fixing frame 160 may be fixed. As the actuating member 150 and the knob ring 120 rotate while being integrated with each other, the knob ring 120 may remain at the initial position and may rotate clockwise or counterclockwise by a predetermined angle due to the elastic forces of the restoring springs s1 and s2.

The knob assembly according to embodiments may include the valve shaft 194 and the valve 190 which may be movable in multiple directions such as upward, downward, and laterally. Compared with a valve in which a valve shaft is at a fixed position with respect to a valve body, the valve 190 may have a structure in which the valve shaft 194 may be movable with respect to a valve body.

When the valve 190 is applied, a position of the knob handle 110 coupled with the valve shaft 194 may not be determined by the valve shaft 194, but the valve shaft 194 may move corresponding to the position of the knob handle 110. Accordingly, the position of the knob handle 110 may be restricted at a predetermined position with respect to the front panel c.

The knob handle 110 and the knob ring 120 may be assembled in place based on the front panel c, and the valve 190 may be assembled in the burner. Even if a position error occurs during an assembly process of the valve 190, the knob handle 110 and the knob ring 120 may be assembled at precise positions with respect to the front panel c. The above-described assembling structure may assemble the knob handle 110 and the knob ring 120 at precise positions with respect to the front panel c irrelevant to or regardless of a tolerance which may occur while the valve is manufactured and may allow the knob handle 110 and the knob ring 120 to smoothly operate.

A general valve may have a structure in which a valve shaft may not be movable with respect to a valve body and may only rotate in place. However, the valve 190 may have a structure in which the valve shaft 194 may be movable with respect to the valve body 191.

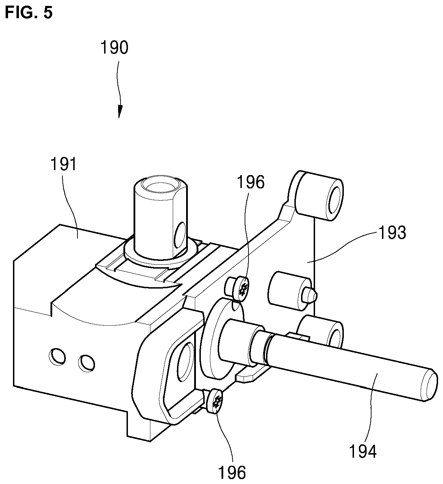

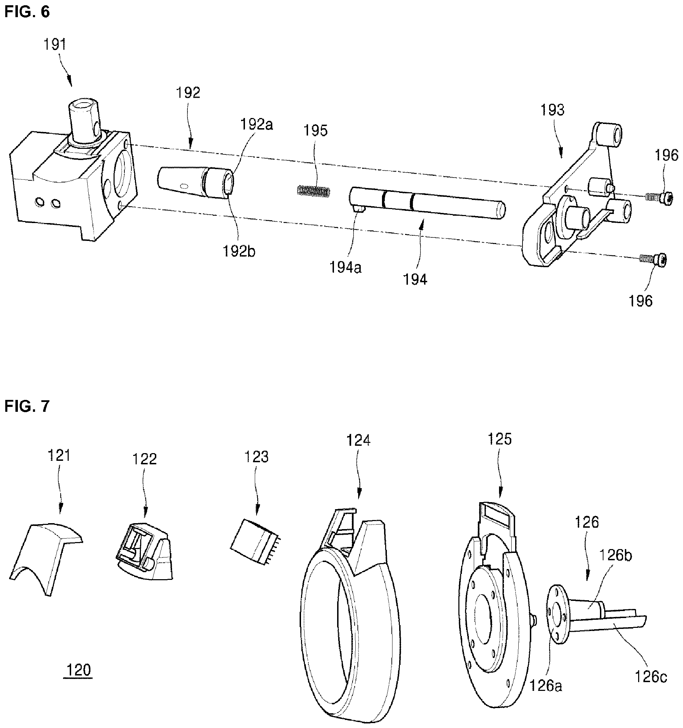

Referring to FIG. 5 and FIG. 6, the valve 190 may include the valve body 191, an opening/closing portion 192 that rotates in the valve body 191 and adjusts an opening degree of the valve 190, the valve shaft 194 being movably inserted into the opening/closing portion 192, an elastic member or spring 195 inserted between the opening/closing portion 192 and the valve shaft 194 to provide an elastic force, and a valve cap 193 coupled with the valve body 191 via fastening members or screws 196 and through which the valve shaft 194 may penetrate.

The valve shaft 194 may include a key 194a that protrudes outward from an end inserted into the opening/closing portion 192, and the opening/closing portion 192 may include a central groove or insertion hole 192a into which the valve shaft 194 may be inserted and a key groove or recess 192b into which the key 194a may be inserted. As the valve shaft 194 is inserted into the opening/closing portion 192 with a gap therebetween, the valve shaft 194 may be movable with respect to the valve body 191. As the key 194a of the valve shaft 194 may be inserted into the key groove 192b of the opening/closing portion 192, rotation of the valve shaft 194 may be transferred to the opening/closing portion 192.

An outer diameter of the valve shaft 194 may be smaller than an inner diameter of the opening/closing portion 192, and a mutual size relation therebetween may be determined to prevent the key 194a from retreating from the key groove 192b even when the valve shaft 194 moves in the opening/closing portion 192. By allowing a width of the key 194a and a width of the key groove 192b to form a small gap corresponding to each other, the opening/closing portion 192 may rotate following rotation of the valve shaft 194 without a gap through the key 194a and the key groove 192b when the valve shaft 194 rotates.

The valve cap 193 may not pass through the key 194a of the valve shaft 194 so as to fix the valve shaft 194 to not deviate from the opening/closing portion 192. The elastic member 195 may provide an elastic force in a direction of pushing the valve shaft 194 from the opening/closing portion 192. Accordingly, due to the elastic force of the elastic member 195, the valve shaft 194 may maintain a state in which the key 194a may be in close contact with the valve cap 193 and may maintain a coupling capable of contracting into the valve cap 193 due to the external force.

Although embodiments of the valve has been described above, the valve is not limited thereto and may have a valve structure in which a valve shaft is movable with respect to a valve body. For example, there may be applied a structure in which a universal joint may be included in a valve shaft.

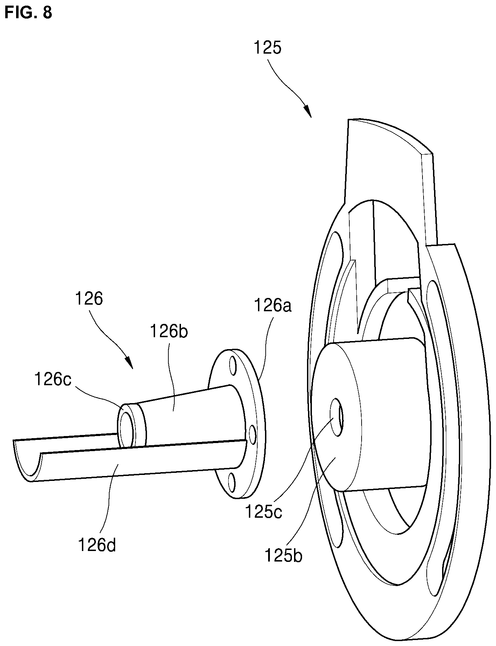

Referring to FIG. 7 and FIG. 8 and according to the invention, the knob ring 120 may include a knob ring body 124, a rear plate 125 coupled with a rear surface of the knob ring body 124, and a support tube 126 coupled with the rear plate 125 to support a knob shaft 114. The rear plate 125 may include a rear plate body 125a and a support plate 125b which may be provided in or on the front panel c and protrude toward the inside of the cooking apparatus. The support plate 125b may include a support hole 125c that supports the knob shaft 114.

The support tube 126 may be coupled with the rear plate 125. The support tube 126 may include a flange 126a coupled with the rear plate 125, a tapered tube 126b that extends from the flange 126a, and a support rib or extension 126d provided around the tapered tube 126b and extending longer than the tapered tube 126b.

The tapered tube 126b may have a tapered shape with a diameter decreasing as it extends away from the flange 126a and may include a supporter or end cap 126c that supports the knob shaft 114 at an end thereof. Thus, the knob shaft may be supported by two points such as the support hole 125c and the supporter 126c.

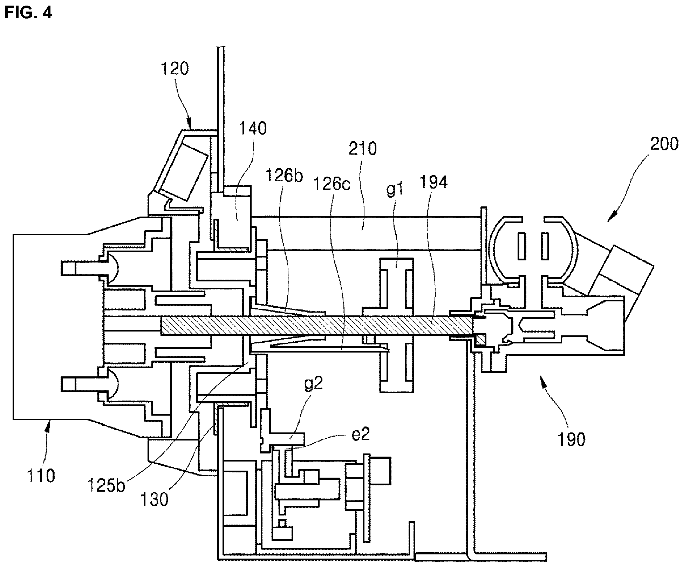

As there is a movable valve 190, a structure for stably supporting the valve shaft 194 is needed. Accordingly, the knob ring 120 may support the valve shaft 194 at at least two points. The knob ring 120 may not only support the valve shaft 194 at two or more points but may also support a front end of the gear g1 coupled with the valve shaft 194. The gear g1 (as shown in FIG. 4) may transfer a rotational amount of the valve shaft 194 to the knob encoder e1 and may be supported while being loaded on the support rib 126d.

The knob ring 120 may also include a display 123 capable of displaying heating power or a time of a timer. The display 123 may be coupled with the knob ring body 124 through a display housing 122, and a finishing cap 121 may be coupled with outside thereof. The finishing cap 121 may be formed of a transparent or translucent material, for example, to allow information displayed on the display 123 to be seen or viewed from an outside.

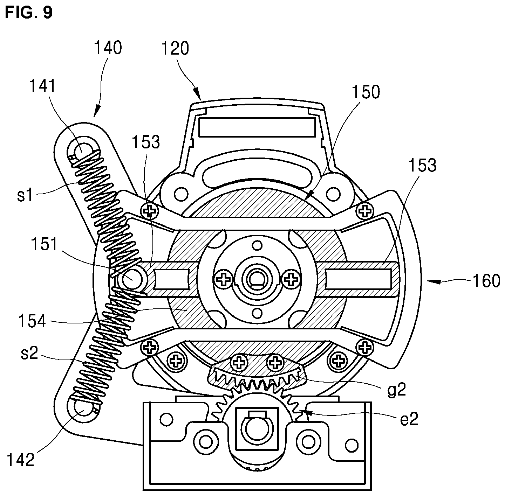

Referring to FIG. 9, a front surface of the front panel c may be coupled with the knob handle 110 and the knob ring 120, and a rear surface of the front panel c may be coupled with the support frame 140, the actuating member 150, and the fixing frame 160. The fixing frame 160 may be fastened to the rear surface of the front panel c, the actuating member 150 may be fastened to the knob ring 120 through the front panel c. A rotational center of the actuating member 150 may be provided to coincide with a shaft center of the knob shaft 114. The actuating member 150 may restrict the shaft center of the knob shaft 114 at a position with respect to the front panel c. When the actuating member 150 is fixed at a position with respect to the front panel c, the knob shaft 114 may be fixed with respect to the front panel c corresponding thereto.

The actuating member 150 may be inserted into the support frame 140, may pass through the front panel c, and may partially protrude from the front surface of the front panel c. A front end of the actuating member 150 may be formed in a cylindrical shape, and a cylindrical part may protrude from the front surface of the front panel c.

The knob ring 120 may be coupled with the actuating member 150 that protrudes from the front surface of the front panel c. As the knob ring 120 and the actuating member 150 may be coupled with each other, the knob ring 120 may be supported by the support frame 140 as a result.

An operation of the knob ring 120 may be recognized from rotation of the actuating member 150. Providing an encoder to sense the operation of the knob ring 120 at the outside of the front panel c around the knob ring 120 may not be aesthetically pleasing as the knob ring 120 may be a part exposed outward from the front panel c. As the knob ring 120 may be integrated and coupled with the actuating member 150, the rotation of the knob ring 120 may be sensed by providing the knob ring encoder e2 around the actuating member 150 and sensing rotation of the actuating member 150.

The knob ring gear g2 that transmits or conveys a rotational angle may be provided at the actuating member 150. The knob ring encoder e2 may be engaged with the gear g2 and may read the rotational angle of the actuating member 150. The knob ring encoder e2 may be engaged with the knob ring gear g2 and may read or recognize a rotational operation signal of the knob ring 120.

The actuating member 150 may be connected to the restoring springs s1 and s2 to return to a predetermined position. The restoring springs s1 and s2 may connect the support frame 140 to the actuating member 150. When the actuating member 150 is operated counterclockwise, the restoring spring s1 may provide an elastic force clockwise to allow the actuating member 150 to return to an original position. When the actuating member 150 is operated clockwise, the restoring spring s2 may provide an elastic force counterclockwise to allow the actuating member 150 to return to the original position.

The fixing frame 160 may be provided to prevent the actuating member 150 from deviating at a rear surface to allow the actuating member 150 to stably operate. The fixing frame 160 may pass through the rear surface of the actuating member 150 and may prevent the actuating member 150 from deviating at the rear surface. The fixing frame 160 may be fastened to the support frame 140. The fixing frame 160 may restrict the rotational range of the actuating member 150.

The actuating member 150 may have a actuating member body 154 and at least one wing portion or wing 153 that extends in one direction, and the pair of restoring springs s1 and s2 may be fixed to the wing 153. As a pivoting range of the wing 153 may be restricted by the fixing frame 160, a bidirectional rotational angle of the actuating member 150 may be uniformly restricted.

To more stably restrict the rotation of the actuating member 150, the wing 153 may be provided at both sides of the actuating member 150, and the fixing frame 160 may uniformly restrict pivoting ranges of both the wings 153. One or a first end of each of the restoring springs s1 and s2 may be connected to an elastic member holder 151 on the actuating member 150, and another or a second end of each of the restoring springs s1 and s2 may be connected to a first spring holder 141 of the support frame 140 and a second spring holder 142 of the support frame 140, respectively.

Embodiments disclosed herein provide a knob assembly that may improve aesthetics of an external shape of a cooking apparatus by fixing a knob handle to be aligned with a front panel. The knob assembly may remove jamming that occurs when the knob handle is operated by applying a valve to allow a valve shaft to flexibly move, may prevent a position error generated when the valve is assembled with a movable valve shaft, and may allow the valve shaft to be stably supported by a knob ring. The knob assembly may improve user convenience by setting a time of a timer through operating the knob ring and displaying the time of the timer on a display provided at or on the knob ring.

Embodiments disclosed herein provide a knob assembly that may include a knob handle that controls a heating power of a cooking apparatus and a knob ring and be capable of being precisely aligned in a center of a front panel of the cooking apparatus. Embodiments disclosed herein also provide a knob assembly precisely aligned with a front panel of a cooking apparatus to prevent jamming or malfunctioning that may occur while a knob handle and a knob ring operate.

According to embodiments disclosed herein, a knob assembly may include a valve that may have a structure in which a valve shaft may be movable, a knob handle coupled with the valve shaft, a knob ring that surrounds the periphery of the knob handle and may be provided to pass through a front panel to support a knob shaft, a actuating member coupled with the knob ring, a support frame coupled with the front panel to support an outer circumferential surface of the actuating member, and a fixing frame coupled with the support frame to prevent the actuating member from deviating or separating from the support frame. The knob assembly may further include a frame to which the valve may be fixed and a guide bar that may fix the support frame to more strongly and precisely fix a position of the support frame.

The valve may include a valve body, an opening/closing portion inserted into the valve body to adjust a flow rate, the valve shaft being inserted into the opening/closing portion, an elastic member inserted between the opening/closing portion and the valve shaft, and a valve cap that prevents the valve shaft from deviating or separating from the opening/closing portion. The valve shaft may include a protruding key in a section inserted in the opening/closing portion, and the opening/closing portion may include an insertion hole into which the valve shaft may be inserted and a key groove into which the key may be inserted.

The knob ring may support the knob shaft at two or more points, and may include a knob ring body, a rear plate including a support hole that supports the valve shaft coupled with a rear surface of the knob ring body and passing therethrough, and a support tube coupled with the rear plate to support the valve shaft. The support tube may include a flange coupled with the rear plate, and a tapered tube that extends from the flange, and may include a supporter that supports the valve shaft.

The knob assembly may further include a disc portion inserted between the knob ring and the front panel, and a bearing shell including a cylinder portion inserted between the actuating member and the support frame. The bearing shell allows the knob ring to smoothly operate, and may prevent the front panel from being damaged.

The knob assembly may further include a knob ring encoder that senses rotation of the actuating member and a knob encoder that senses rotation of the valve shaft to display a time of a timer or a heating power sensed on a display device or display provided at the knob ring.

Any reference in this specification to "one embodiment," "an embodiment," "example embodiment," etc., means that a particular feature, structure, or characteristic described in connection with the embodiment is included in at least one embodiment. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

## Claims

1. A knob assembly for a cooking appliance, comprising:
a valve (190) including a movable valve shaft (194);
a knob (110) connected to a knob shaft (114), the knob shaft (114) being coupled with the valve shaft (194);
a knob ring (120) surrounding a periphery of the knob (110) and supporting the knob shaft (114);
an actuating member (150) coupled with the knob ring (120);
a support frame (140) supporting the actuating member (150); and
a fixing frame (160) coupled with the support frame (140) for preventing the actuating member (150) from separating from the support frame (140),
**characterized in that** the knob ring (120) includes:
a knob ring body (124);
a rear plate (125) including a support hole (125c) for supporting the valve shaft (194) passing through the support hole (125c); and
a support tube (126) coupled with the rear plate (125) for supporting the valve shaft (194).

2. The knob assembly of claim 1, wherein the valve (190) is fixed to a frame (200) and the frame (200) is fixed to a guide bar (210).

3. The knob assembly of claim 1, wherein the valve (190) includes:
a valve body (191);
an opening/closing portion (192) inserted into the valve body (191) for adjusting a flow rate of a fluid passing through the valve (190), the valve shaft (194) being movably inserted into the opening/closing portion;
an elastic spring (195) inserted between the opening/closing portion and the valve shaft; and
a valve cap (193) for preventing the valve shaft from separating from the opening/closing portion (192).

4. The knob assembly of claim 3, wherein the valve shaft (194) includes a key (194a) configured to be inserted in the opening/closing portion (192), and wherein the opening/closing portion (192) includes an insertion hole (192a) for insertion of the valve shaft (194) there into and a key groove (192b) for insertion of the key (194) there into.

5. The knob assembly of any one of preceding claims, wherein the support tube (126) includes:
a flange (126a) coupled with the rear plate (125); and
a tapered tube (126b) that extends from the flange (126a) and includes a supporter (126c) that supports an end of the valve shaft (194).

6. The knob assembly according to any one of the preceding claims, further including:
a disc portion (132) configured to be inserted between the knob ring (120) and a panel (c) to which the knob assembly is to be mounted; and
a bearing shell (130) that includes a cylinder portion (134) inserted between the actuating member (150) and the support frame (140).

7. The knob assembly according to any one of the preceding claims, further comprising:
a knob ring encoder (e2) configured to sense rotation of the actuating member (150); and/or
a knob encoder (e1) configured to sense rotation of the valve shaft (194).

8. The knob assembly according to any one of the preceding claims, wherein the knob ring (120) further includes a display (123) for displaying a time of a timer and/or a heating power.

9. The knob assembly according to any one of the preceding claims, wherein the fixing frame (160) is configured to restrict rotation of the knob (110) and/or of the actuating member (150) within a predetermined angle range.

10. The knob assembly of claim 9, wherein the fixing frame (160) has a bow-tie shape such that ends of the fixing frame (160) are configured to restrict the actuating member (150).

11. The knob assembly according to any one of the preceding claims, wherein the actuating member (150) includes a actuating member body (154) and at least one wing (153) extending from the actuating member body (154), and wherein a pair of restoring springs (s1, s2) is fixed to the at least one wing for restoring a position of the knob (110) after rotation of the knob (110).

12. A cooking apparatus including the knob assembly according to any one of the preceding claims.

13. The cooking apparatus of claim 12, comprising:
a panel (c) having a first surface and a second surface;
wherein the knob ring (120) is provided on the first surface of the panel and passes through the panel so as to support the knob shaft (194); and
wherein the support frame (140) is provided on the second surface of the panel to support an outer circumferential surface of the actuating member (150).

14. The cooking apparatus of claim 12 or 13, wherein the knob (110) is rotatable and configured to control operation of a burner, and/or wherein the valve (190) is configured to adjust a flow rate of gas introduced into the burner.

## Patentansprüche

1. Drehknopfanordnung für ein Kochgerät, die Folgendes umfasst:
ein Ventil (190), das eine bewegliche Ventilwelle (194) enthält;
einen Drehknopf (110), der mit einer Drehknopfwelle (114) verbunden ist, wobei die Drehknopfwelle (114) an die Ventilwelle (194) gekoppelt ist;
einen Drehknopfring (120), der einen Umfang des Drehknopfs (110) umgibt und die Drehknopfwelle (114) umgibt;
ein Betätigungselement (150), das an den Drehknopfring (120) gekoppelt ist;
einen Tragrahmen (140), der das Betätigungselement (150) trägt; und
einen Befestigungsrahmen (160), der an den Tragrahmen (140) gekoppelt ist, um zu verhindern, dass sich das Betätigungselement (150) vom Tragrahmen (140) trennt,
wobei der Drehknopfring (120) **gekennzeichnet ist durch**
einen Drehknopfringkörper (124);
eine Rückplatte (125), die ein Tragloch (125c) zum Tragen der Ventilwelle (194), die durch das Tragloch (125c) verläuft, enthält; und
ein Tragrohr (126), das an die Rückplatte (125) gekoppelt ist, um die Ventilwelle (194) zu tragen.

2. Drehknopfanordnung nach Anspruch 1, wobei das Ventil (190) an einem Rahmen (200) befestigt ist und der Rahmen (200) an einem Führungsstab (210) befestigt ist.

3. Drehknopfanordnung nach Anspruch 1, wobei das Ventil (190) Folgendes enthält:
einen Ventilkörper (191);
einen Öffnungs-/Schließabschnitt (192), der in den Ventilkörper (191) eingesetzt ist, um eine Durchflussmenge eines Fluids, das durch das Ventil (190) fließt, anzupassen, wobei die Ventilwelle (194) in den Öffnungs-/Schließabschnitt beweglich eingesetzt ist;
eine Sprungfeder (195), die zwischen den Öffnungs-/Schließabschnitt und die Ventilwelle eingesetzt ist; und
eine Ventilkappe (193), um zu verhindern, dass sich die Ventilwelle vom Öffnungs-/Schließabschnitt (192) trennt.

4. Drehknopfanordnung nach Anspruch 3, wobei die Ventilwelle (194) einen Keil (194a) enthält, der konfiguriert ist, in den Öffnungs-/Schließabschnitt (192) eingesetzt zu werden, und der Öffnungs-/Schließabschnitt (192) ein Einsetzloch (192a) zum Einsetzen der Ventilwelle (194) und eine Keilnut (192b) zum Einsetzen des Keils (194) enthält.

5. Drehknopfanordnung nach einem der vorhergehenden Ansprüche, wobei das Tragrohr (126) Folgendes enthält:
einen Flansch (126a), der an die Rückplatte (125) gekoppelt ist; und
ein konisches Rohr (126b), das sich vom Flansch (126a) erstreckt und einen Träger (126c) enthält, der ein Ende der Ventilwelle (194) trägt.

6. Drehknopfanordnung nach einem der vorhergehenden Ansprüche, die ferner Folgendes enthält:
einen Scheibenabschnitt (132), der konfiguriert ist, zwischen den Drehknopfring (120) und eine Platte (c), an der die Drehknopfanordnung montiert werden soll, eingesetzt zu werden; und
eine Lagerschale (130), die einen Zylinderabschnitt (134) enthält, der zwischen das Betätigungselement (150) und den Tragrahmen (140) eingesetzt ist.

7. Drehknopfanordnung nach einem der vorhergehenden Ansprüche, die ferner Folgendes enthält:
einen Drehknopfringcodierer (e2), der konfiguriert ist, eine Drehung des Betätigungselements (150) zu erfassen; und/oder
einen Drehknopfcodierer (e1), der konfiguriert ist, eine Drehung der Ventilwelle (194) zu erfassen.

8. Drehknopfanordnung nach einem der vorhergehenden Ansprüche, wobei der Drehknopfring (120) ferner eine Anzeigevorrichtung (123) zum Anzeigen einer Zeit eines Zeitgebers und/oder einer Heizleistung enthält.

9. Drehknopfanordnung nach einem der vorhergehenden Ansprüche, wobei der Befestigungsrahmen (160) konfiguriert ist, eine Drehung des Drehknopfs (110) und/oder des Betätigungselements (150) in einem vorgegebenen Winkelbereich einzuschränken.

10. Drehknopfanordnung nach Anspruch 9, wobei der Befestigungsrahmen (160) eine Fliegenform besitzt, derart, dass Enden des Befestigungsrahmens (160) konfiguriert sind, das Betätigungselement (150) einzuschränken.

11. Drehknopfanordnung nach einem der vorhergehenden Ansprüche, wobei das Betätigungselement (150) einen Betätigungselementkörper (154) und mindestens einen Flügel (153), der sich vom Betätigungselementkörper (154) erstreckt, enthält und zwei Rückstellfedern (s1, s2) an dem mindestens einen Flügel befestigt sind, um eine Position des Drehknopfs (110) nach einer Drehung des Drehknopfs (110) wiederherzustellen.

12. Kochvorrichtung, die die Drehknopfanordnung nach einem vorhergehenden Ansprüche enthält.

13. Kochvorrichtung nach Anspruch 12, die Folgendes umfasst:
eine Platte (c), die eine erste Oberfläche und eine zweiten Oberfläche besitzt;
wobei der Drehknopfring (120) auf der ersten Oberfläche der Platte vorgesehen ist und durch die Platte verläuft, um die Ventilwelle (194) zu tragen; und
wobei der Tragrahmen (140) auf der zweiten Oberfläche der Platte vorgesehen ist, um eine Außenumfangsfläche des Betätigungselements (150) zu tragen.

14. Kochvorrichtung nach Anspruch 12 oder 13, wobei der Drehknopf (110) drehbar ist und konfiguriert ist, den Betrieb eines Brenners zu steuern, und/oder das Ventil (190) konfiguriert ist, eine Durchflussmenge von Gas, das in den Brenner eingeleitet wird, einzustellen.

## Revendications

1. Ensemble de bouton pour un appareil de cuisson, comportant :
un clapet (190) incluant une tige de clapet mobile (194) ;
un bouton (110) relié à une tige de bouton (114), la tige de bouton (114) étant couplée à la tige de clapet (194) ;
une bague de bouton (120) entourant une périphérie du bouton (110) et supportant la tige de bouton (114) ;
un élément d'actionnement (150) couplé à la bague de bouton (120) ;
une armature de support (140) supportant l'élément d'actionnement (150) ; et
une armature de fixation (160) couplée à l'armature de support (140) pour empêcher l'élément d'actionnement (150) de se séparer de l'armature de support (140) ;
**caractérisé en ce que** la bague de bouton (120) inclut :
un corps de bague de bouton (124) ;
une plaque arrière (125) incluant un trou de support (125c) pour supporter la tige de clapet (194) passant à travers le trou de support (125c) ; et
un tube de support (126) couplé à la plaque arrière (125) pour supporter la tige de clapet (194).

2. Ensemble de bouton selon la revendication 1, dans lequel le clapet (190) est fixé à un châssis (200) et le châssis (200) est fixé à une barre de guidage (210).

3. Ensemble de bouton selon la revendication 1, dans lequel le clapet (190) inclut :
un corps de clapet (191) ;
une partie d'ouverture/de fermeture (192) insérée dans le corps de clapet (191) pour régler un débit d'un fluide passant à travers le clapet (190), la tige de clapet (194) étant insérée de manière mobile dans la partie d'ouverture/de fermeture ;
un ressort élastique (195) inséré entre la partie d'ouverture/de fermeture et la tige de clapet ; et
un chapeau de clapet (193) pour empêcher la tige de clapet de se séparer de la partie d'ouverture/de fermeture (192).

4. Ensemble de bouton selon la revendication 3, dans lequel la tige de clapet (194) inclut une clavette (194a) configurée pour être insérée dans la partie d'ouverture/de fermeture (192), et dans lequel la partie d'ouverture/de fermeture (192) inclut un trou d'insertion (192a) pour une insertion de la tige de clapet (194) dans celui-ci et une gorge de clavette (192b) pour une insertion de la clavette (194) dans celle-ci.

5. Ensemble de bouton selon l'une quelconque des revendications précédentes, dans lequel le tube de support (126) inclut :
une bride (126a) accouplée à la plaque arrière (125) ; et
un tube conique (126b) qui s'étend à partir de la bride (126a) et inclut un élément de support (126c) qui supporte une extrémité de la tige de clapet (194).

6. Ensemble de bouton selon l'une quelconque des revendications précédentes, incluant en outre :
une partie de disque (132) configurée pour être insérée entre la bague de bouton (120) et un panneau (c) sur lequel l'ensemble de bouton doit être monté ; et
une coquille de palier (130) qui inclut une partie de cylindre (134) insérée entre l'élément d'actionnement (150) et l'armature de support (140).

7. Ensemble de bouton selon l'une quelconque des revendications précédentes, comportant en outre :
un codeur de bague de bouton (e2) configuré pour détecter une rotation de l'élément d'actionnement (150) ; et/ou
un codeur de bouton (e1) configuré pour détecter une rotation de la tige de clapet (194).

8. Ensemble de bouton selon l'une quelconque des revendications précédentes, dans lequel la bague de bouton (120) inclut en outre un affichage (123) pour afficher un temps d'une minuterie et/ou une puissance de chauffage.

9. Ensemble de bouton selon l'une quelconque des revendications précédentes, dans lequel l'armature de fixation (160) est configurée pour restreindre une rotation du bouton (110) et/ou de l'élément d'actionnement (150) sur une plage angulaire prédéterminée.

10. Ensemble de bouton selon la revendication 9, dans lequel l'armature de fixation (160) a une forme de nœud papillon de telle sorte que des extrémités de l'armature de fixation (160) sont configurées pour restreindre l'élément d'actionnement (150).

11. Ensemble de bouton selon l'une quelconque des revendications précédentes, dans lequel l'élément d'actionnement (150) inclut un corps d'élément d'actionnement (154) et au moins une aile (153) s'étendant à partir du corps d'élément d'actionnement (154), et dans lequel une paire de ressorts de rappel (s1, s2) est fixée à la au moins une aile pour rappeler une position du bouton (110) après la rotation du bouton (110).

12. Appareil de cuisson incluant l'ensemble de bouton selon l'une quelconque des revendications précédentes.

13. Appareil de cuisson selon la revendication 12, comportant :
un panneau (c) ayant une première surface et une seconde surface ;
dans lequel la bague de bouton (120) est agencée sur la première surface du panneau et passe à travers le panneau de manière à supporter la tige de bouton (194) ; et
dans lequel l'armature de support (140) est agencée sur la seconde surface du panneau pour supporter une surface circonférentielle extérieure de l'élément d'actionnement (150).

14. Appareil de cuisson selon la revendication 12 ou 13, dans lequel le bouton (110) peut tourner et est configuré pour commander le fonctionnement d'un brûleur, et/ou dans lequel le clapet (190) est configuré pour régler un débit de gaz introduit dans le brûleur.
